(19) Europäisches Patentamt
European Patent Office
Office européen des brevets

(11) **EP 1 209 860 B1**

(12) **EUROPÄISCHE PATENTSCHRIFT**

(45) Veröffentlichungstag und Bekanntmachung des Hinweises auf die Patenterteilung:
**22.08.2007 Patentblatt 2007/34**

(51) Int Cl.:
*H04L 12/56* *(2006.01)*

(21) Anmeldenummer: **00125912.6**

(22) Anmeldetag: **27.11.2000**

(54) **Bandbreitenreservierung in Datennetzwerken**

Bandwidth reservation in data networks

Réservation de bande passante dans les réseaux de données

(84) Benannte Vertragsstaaten:
**AT BE CH CY DE DK ES FI FR GB GR IE IT LI LU MC NL PT SE TR**

(43) Veröffentlichungstag der Anmeldung:
**29.05.2002 Patentblatt 2002/22**

(73) Patentinhaber: **SIEMENS AKTIENGESELLSCHAFT**
**80333 München (DE)**

(72) Erfinder:
• **Altenbernd, Peter**
**33178 Borchen (DE)**
• **Schneider, Simon**
**33100 Paderborn (DE)**

(56) Entgegenhaltungen:
• SJODIN M ET AL: "Analysing multimedia traffic in real-time ATM networks" PROCEEDINGS OF THE FIFTH IEEE REAL-TIME TECHNOLOGY AND APPLICATIONS SYMPOSIUM, PROCEEDINGS OF RTAS'99: FIFTH IEEE REAL-TIME TECHNOLOGY AND APPLICATIONS SYMPOSIUM, VANCOUVER, BC, CANADA, 2-4 JUNE 1999, Seiten 203-212, XP002166850 1999, Los Alamitos, CA, USA, IEEE Comput. Soc, USA ISBN: 0-7695-0194-X
• JAMIN S ET AL: "A MEASUREMENT-BASED ADMISSION CONTROL ALGORITHM FOR INTEGRATED SERVICE PACKET NETWORKS" IEEE / ACM TRANSACTIONS ON NETWORKING, US,IEEE INC. NEW YORK, Bd. 5, Nr. 1, 1. Februar 1997 (1997-02-01), Seiten 56-69, XP000678916 ISSN: 1063-6692

**Beschreibung**

Technisches Gebiet

Die Erfindung betrifft die Bandbreitenreservierung in Datennetzwerken, insbesondere für die Übertragung von Multimedia-Daten in Computernetzwerken wie dem Internet.

Stand der Technik

Das Internet macht weitgehend Gebrauch von dem verbindungsorientierten Protokoll TCP/IP, das wiederum das darunterliegende Internet-Protokoll, abgekürzt IP, verwendet. IP seinerseits ist ein Datagramm-Protokoll, das auf Grund seiner Datagramm-Eigenschaft sehr leicht administriert und skaliert werden kann und damit zum Erfolg des Internet maßgeblich beigetragen hat. Ein Datagramm-Protokoll wie insbesondere IP hat jedoch den Nachteil, daß eine Zusage für eine Übertragung weder überhaupt noch in einer bestimmten Datenmenge in einer bestimmten Zeit nicht gegeben ist. Dies wird als 'best effort' bezeichnet, nach dem jeder Netzknoten bestmöglich versucht, die Datenpakete weiterzuleiten, womit auf eine garantierte Zuverlässigkeit verzichtet wird. Wo diese benötigt wird, stellt daher ein Protokoll der darüberliegenden Schicht, wie TCP/IP, über Wiederholungen, Zustandsnachrichten und Zeitabläufe eine zuverlässige Verbindung bereit. Für die Majorität der bisherigen Anwendungen ist diese Verbesserung ausreichend. Eine solche Zusicherung wird als Servicequalität, engl. 'quality of service', bezeichent. TCP/IP liefert demgemäß die Servicequalität, daß die Nachrichten tatsächlich und in der Reihenfolge des Absendens eintreffen, solange die darunterliegende Schicht überhaupt funktioniert, d.h. die Verbindung nicht als defekt signalisiert wird.

Für die Übertragung von Telefonie und insbesondere Bewegtbildern wird jedoch eine weitere Qualität der Übertragung benötigt. Diese besteht insbesonder darin, daß die Daten innerhalb einer bestimmten Zeit übertragen werden. In Kenntnis dieser maximalen Verzögerungszeit kann der Empfänger einen ausreichenden Puffer aufbauen und so eine ruckfreie Darstellung von Bewegtbildern sicherstellen.

Diese Verbesserung der Übertragungszusagen in Netzwerken werden unter dem Stichwort 'Quality of Service' diskutiert. Als Überblick, der das allgemeine Wissen des Fachmanns auf diesem Gebiet zusammenfaßt, sei das Buch von P. Ferguson und G. Huston, "Quality of Service", Wiley & Sons 1998 (ISBN 0-471-24358-2) genannt.

Für die Reservierung derartiger Verbindungen im Internet ist das Protokoll RSVP vorgesehen, welches in dem Dokument "Resource Reservation Protocol (RSVP)" von R. Braden et.al., RFC 2205, September 1997, beschrieben ist. RSVP ist lediglich für den Aufbau der Reservierung zuständig. Für die Spezifikation der Betriebsmittel selbst, hier der Servicequalität, sind mit RSVP vom Prinzip her mehrere Protokolle einsetzbar, beispielsweise das im Dokument "Specification of Guaranteed Quality of Service" von S. Shenker et.al., RFC 2212, September 1997, beschriebene Protokoll. Dieses beschreibt die zu reservierenden Betriebsmittel durch Parameter des 'token bucket' Modells.

Untersuchungen hierzu sind auch in dem Artikel "Efficient Support of Delay and Rate Guarantees in an Internet" von L. Georgiadis et.al, SIGCOMM 1996, p.106-116, veröffentlicht. Das darin verwendete 'token bucket' Modell wurde als ein weitgehend unspezifisches Modell gewählt, das auch die sinnvolle Spezifikation von Daten mit nicht gleichmäßiger Datenrate erlauben soll. Daten mit ungleichmäßiger Datenrate sind insbesondere nach MPEG2 komprimierte Videodaten, bei denen neben vollen Schlüsselbildern auch wesentlich kleinere Änderungsbilder übertragen werden. Mangels anderer Regeln muß für solche Datenströme die Reservierung an den großen Schlüsselbildern ausgerichtet werden.

Es ist Aufgabe der Erfindung, die Parameter für die Reservierung eines Transports von insbesondere Multimedia-Daten besser als bislang bestimmbar zu machen und anzugeben, wie die zugehörigen Parameter zweckmäßig ausgetauscht werden.

Die Lösung verwendet zur Beschreibung der Multimedia-Daten eine sich wiederholende Sequenz von Bildgrößen und ihren Zeitabständen. Aus dieser kann mit Hilfe einer einfachen Analyse bzw. Simulation die optimalen Parameter für die Reservierung mit RFC 2212 bestimmt werden.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert.

Beschreibung einer Ausführungsform der Erfindung

Die Erfindung wird im folgenden an Hand eines Beispiels zur Übertragung von Videodaten über digitale Verbindungen zwischen Computern beschrieben.

Videodaten bestehen in der Regel aus einer Folge von Bildern, die in gleichmäßigen Abständen anfallen, übertragen und zur Wiedergabe bereitgestellt werden müssen. In digitalen Systemen werden die Bilder vorzugsweise beim Sender um beispielsweise den Faktor 10 komprimiert. Das in den hierzu einschlägigen MPEG-Standards verwendete Verfahren entspricht dem für Einzelbilder bekannten JPEG-Verfahren. Werden lediglich die Einzelbilder mit JPEG komprimiert, wird das auch als M-JPEG bezeichnet.

Der Empfänger dekomprimiert die Daten und stellt sie auf einem Bildschirm dar. Dabei ist es unabdingbar, daß die dekomprimierten Einzelbilder wieder in gleichmäßigen Abständen zur Anzeige bereitstehen, damit kein "Ruckeln" von Bewegtbildern entsteht. Daher wird in der Regel ein Puffer vorgesehen, in dem meist mehrere Bilder abrufbereit gespeichert sind. Der Puffer kann funktional Teil der Datenübertragungseinrichtung sein oder von dem Anzeigeprogramm bereitgestellt werden.

Für die Bestimmung der Puffergröße ist es notwendig, die Differenz zwischen der kleinsten und der größten Verzögerung zwischen Abliefern eines Bildes durch den Sender und Bereitstellung im Empfänger zu kennen. Im folgenden wird zur Vereinfachung angenommen, daß die kleinste Verzögerung Null ist, da die absolute Verzögerung für die hier interessierenden Fragen ohne Belang ist.

Sofern die Daten mit einem IP-Protokoll wie UDP übertragen werden sollen, liegt das Problem darin, daß diese normalerweise keine Spezifikationen über Laufzeiten enthalten. Man nennt dieses Betriebsverfahren 'best effort'.

Eine der einfachsten Maßnahmen besteht darin, eine vorgegebene Bandbreite zu garantieren, wie dies beispielsweise bei einem ISDN B-Kanal der Fall ist. Diese Methode ist für herkömmlichen Videodaten, bei denen jedes Bild (engl. 'frame') einzeln komprimiert und im festen Zeitraster übertragen wird, angemessen; die benötigte Bandbreite ist einfach die maximale komprimierte Bildgröße, dividiert durch den Abstand der Bilder. Für typische Fernsehsignale ist eine komprimierte Bildgröße von 40 kByte und ein Abstand von 20 msec gegeben, was einer Bandbreite von 2 MByte/sec entspricht. Videokonferenzen, die beispielsweise zwei gebündelte ISDN-Kanäle verwenden, reduzieren die Bildgröße und die Bildwiederholrate, um mit 128 kBit/sec auszukommen. Diese Bandbreite wird dann aber auch kontinuierlich benutzt, so daß die Verzögerung auf der Strecke wenig schwankt und gut vorhersagbar ist. Es sei darauf hingewiesen, daß bei schwankenden Verzögerungen der Empfänger einen großen Puffer benötigt und erst nach dem Auffüllen des Puffers mit der Wiedergabe beginnen kann, so daß eine bei Videokonferenzen sehr auffallende Verzögerung entsteht. Mit der Einführung der Videodaten-Kompression nach dem MPEG Standard jedoch werden neben vollständigen (komprimierten) Bildern auch solche übertragen, die nur die Unterschiede zwischen aufeinanderfolgenden Bildern codieren und demgemäß wesentlich kleiner sind. Eine typische Abfolge besteht beispielsweise aus acht 'frames' im Abstand von 20 msec mit den Größen 40kByte, dreimal 10 kByte, einmal 20 kByte, und dreimal 10 kByte. Die mittlere Bandbreite beträgt nur noch 120 kByte pro 160 msec, also nur noch 750 kByte/sec. Obwohl die mittlere benötigte Bandbreite geringer ist, muß für die Übertragung die von dem größten Bild bestimmte maximale Bandbreite von 2 MByte/sec reserviert werden.

Für ATM-Netzwerke ('asynchroneous transfer mode') wurde daher in dem Artikel "Analysing Multimedia Traffic in Real-Time ATM Networks" von M. Sjödin und H. Hansson, Proc. 5th Real-Time Tech. and Appl. Symposium, RTAS'99, eine in den Knoten eines ATM-Netzwerks anzuwendende Methode vorgeschlagen, mit der bei gegebener Charakteristik des Multimedia-Datenstroms der Bandbreitenbedarf reduziert werden kann. Diese Methode ist jedoch auf ATM-Netzwerke bezogen, bei denen virtuelle Verbindungen geschaffen werden und die Daten durch das Netzwerk in sehr kleine, Zellen genannte Einheiten von 48 Bytes fragmentiert werden.

Für die Übertragung von Videodaten mit IP-Protokollen wurden, wie oben bereits erwähnt, Ergänzungen spezifiziert. Diese umfassen ein Protokoll, mit dem ein Datenübertragungsweg in dem Netzwerk derart festgeschrieben werden kann, daß eine garantierte, d.h. vorbestimmte und spezifizierte, Ablieferung von übertragenen Daten gesichert ist. Dies ist das 'Resource Reservation Protokoll', kurz RSVP, das in dem oben bereits genannten Dokument RFC 2205 (Braden et.al., 1997) beschrieben ist. Mit RSVP sendet der Sender eines Datenstroms eine Nachricht über das Netzwerk an den (oder die) Empfänger. Diese Nachricht enthält eine Spezfikation der benötigten Dienstqualität und bestimmt gleichzeitig einen Pfad durch das Netzwerk vom Sender zum Empfänger. Der Empfänger antwortet mit ergänzten oder modifizierten Parametern und erhält, wenn diese Nachricht wie vorgesehen beim Sender ankommt, einen reservierten Weg mit garantierten Übertragungseigenschaften. Für die Beschreibung der Dienstqualität, engl. 'Quality of Service', kurz QoS, sind in RSVP verschiedene Spezifikationen möglich; beispielsweise die nach RFC 2212 (Shenker et.al., Specification of Guaranteed Quality of Service, 1997).

Bei der Verwendung von RFC 2212 zur Bescheibung der Dienstqualität wird ein quasi-kontinuierliches Modell eingesetzt, das als 'token bucket model' bezeichnet wird. Hierbei ist ein Puffer vorhanden, der mindestens mit der reservierten Bandbreite entleert wird. Gefüllt werden kann der Puffer mit einer höheren Datenrate, wobei selbstverständlich die mittlere Datenrate nicht über der für die Entleerung spezifizierten Datenrate, d.h. der reservierten Bandbreite, liegen kann. Die Beschreibung der Dienstqualität nach dem 'token bucket model' hat den Vorteil, dass sie unabhängig von der Implementation der Vermittlungsknoten ist.

Im RFC 2212 werden fünf von dem die Verbindung aufbauenden Empfänger anzugebende Parameter genannt. Es sind dies:

r:  die mittlere Bandbreite ('token bucket rate')
R:  die reservierte Bandbreite ('reserved bandwidth')
b:  die Puffergröße ('token bucket depth')
p:  die maximale Bandbreite ('peak rate')

M:    die maximale Paketgröße ('maximum packet size')

Damit wird dann eine maximale Verzögerung

$$d = \frac{b-M}{R} \cdot \frac{p-R}{p-r} + \frac{M}{R}$$

garantiert.

Für das oben genannte Beispiel ergibt sich als mittlere Bandbreite r = 750 kByte/sec und als Spitzenbandbreite p = 2000 kByte/sec. Die reservierte Bandbreite R muß auf jeden Fall größer oder gleich der mittleren Bandbreite sein; so sei beispielsweise eine Bandbreite R = 1000 kByte/sec zu reservieren. Der Faktor $\frac{p-R}{p-r}$ ergibt sich damit zu 0.8.

Bleiben noch zwei Größen, nämlich b und M, festzulegen. Für M ist offenbar 40 kByte zu wählen, da dies der größte Frame ist. Als Puffer wird Platz für alle acht 'frames' vorgesehen, also b = 120 kByte. Dann ergibt sich

$$b = \frac{120k - 40k}{1000k} \cdot 0.8 + \frac{40k}{1000k} = (64 + 40)m\sec = 104m\sec$$

Der Emfänger muß also bei dieser Wahl dieser Parameter einen Puffer für sechs 'frames' vorhalten.

Im übrigen ist die mittlere Bandbreite gleichzeitig die minimale Bandbreite oder Mindestbandbreite, da eine Akkumlation von noch nicht übertragenen Daten nicht möglich ist.

Es ist jedoch möglich, die Parameter wesentlich enger zu bestimmen und so sowohl die Verzögerung zu reduzieren als auch eine bessere Ausnutzung des Netzwerks zu erreichen.

Dabei wird der oben als Beispiel benutzte Datenstrom als ein Tupel (40k, 10k, 10k, 10k, 20k, 10k, 10k, 10k) zusammen mit dem Frameabstand von 20ms dargestellt. Dieses Tupel beschreibt eine Sequenz von Datenblöcken, die repetitiv ist, d.h. zyklisch wiederholt wird. Die maximale Datenrate ergibt sich unverändert als Quotient der Größe des größten Blocks durch den Frameabstand. Die Mindestbandbreite ist gleichfalls unverändert die Summe der Blockgrößen durch die Gesamtdauer der Sequenz.

Für die Bestimmung der Puffergröße wird nunmehr berücksichtigt, daß die Daten mindestens mit der reservierten Bandbreite R weitergeleitet werden und für die weitergeleiteten Daten kein Puffer benötigt wird. Eine Simulation bestimmt daher die jeweils benötigte Puffergröße folgendermaßen:

Zuächst werden die Sequenzangaben in eine Folge akkumuliert, in der die übertragenen Datenmengen der jeweils vergangenen Zeit zugeordnet werden.

Diese Tabelle sieht dann für das Beispiel so aus:

| | |
|---|---|
| 00ms | 40k |
| 20ms | 50k |
| 40ms | 60k |
| 60ms | 70k |
| 80ms | 90k |
| 100ms | 100k |
| 120ms | 110k |
| 140ms | 120k |

Jede Zeile entsteht aus der vorherigen durch Addition des jeweiligen, hier im Beispiel konstanten, Zeitdifferenz und der jeweilgen Blockgröße, wobei die Größe des ersten Blocks bereits in der ersten Zeile beim Zeitpunkt 0 erscheint. Nunmehr wird eine weitere Spalte hinzugefügt, in der die für die zu reserviernde Bandbreite R bereits übertragene Datenmenge bestimmt wird, und diese in der vierten Spalte von der eingetroffenen Datenmenge subtrahiert wird:

| | | | |
|---|---|---|---|
| 00ms | 40k | 0 | 40k |
| 20ms | 50k | 20k | 30k |
| 40ms | 60k | 40k | 20k |
| 60ms | 70k | 60k | 10k |
| 80ms | 90k | 80k | 10k |
| 100ms | 100k | 100k | 0 |
| 120ms | 110k | 120k | 0 |
| 40ms | 120k | 140k | 0 |

Es ergibt sich für dieses Beispiel, daß ein Puffer für den ersten größten Block ausreichend ist, also b = 40 kByte. Dann ergibt sich

$$b = \frac{40000 - 40000}{1000} \cdot 0.8 + \frac{40000}{1000} = 0 + 40 = 40m\sec$$

also eine wesentlich kleinere zugesagte Verzögerung.

In den meisten Fällen ist jedoch eine Blockgröße von 40kByte nicht zulässig. Die hier relevante Angabe ist die 'maximum transmission unit', MTU. Diese beträgt in lokalen Netze wie Ethernet meist ca. 1kByte. Um die nachfolgenden Beispiele übersichtlicher zu machen, soll statt dessen eine Blockgröße von 8kByte verwendet werden.

Die Aufteilung des ersten Blocks von 40kByte in 5 Blöcke ä 8kByte erfolgt zweckmäßig im Sender. Damit ergibt sich dann ein entsprechend geringerer Zeitabstand von 4msec pro Block. Die obige Tabelle ergibt sich dann wie folgt:

| | | | |
|---|---|---|---|
| 00ms | 8k | 0 | 8k |
| 04ms | 16k | 4k | 12k |
| 08ms | 24k | 8k | 16k |
| 12ms | 32k | 12k | 20k |
| 16ms | 40k | 16k | 24k |
| 20ms | 48k | 20k | 24k |
| 24ms | 50k | 24k | **26k** |
| 28ms | 50k | 28k | 22k |
| 32ms | 50k | 32k | 18k |
| 36ms | 50k | 36k | 14k |
| 40ms | 58k | 40k | 18k |
| 44ms | 60k | 44k | 16k |
| 48ms | 60k | 48k | 12k |

Die weiteren Zeilen wurden der Übersichtlichkeit halber weggelassen. Es ergibt sich, daß ein Puffer von 26kByte ausreichend ist.

Damit werden b=26k und M=8k, es reduziert sich die zugesagte maximale Verzögerung auf

$$b = \frac{26k - 8k}{1000k} \cdot 0.8 + \frac{8k}{1000k} = (18 \cdot 0.8 + 8)m\sec = 23m\sec$$

d.h. in der Größenordnung eines zusätzlichen Frames. Voraussetzung ist dabei, daß der Sender oder die Netzwerk-Software im Sender die Pakete auch in dem vorgesehenen Abstand von 4ms abschickt.

Soll diese enge Bedindung entschärft und der Abstand auf 2 msec reduziert, aber die Blockgröße von 8kByte beibehalten werden, ergibt sich folgende Simulation:

| | | | |
|---|---|---|---|
| 00ms | 8k | 0 | 8k |
| 02ms | 16k | 2k | 14k |
| 04ms | 24k | 4k | 20k |
| 06ms | 32k | 6k | 26k |
| 08ms | 40k | 8k | **32k** |
| 10ms | 40k | 10k | 30k |
| 12ms | 40k | 12k | 28k |
| 14ms | 40k | 14k | 26k |
| 16ms | 40k | 16k | 24k |
| 18ms | 40k | 18k | 22k |
| 20ms | 48k | 20k | 28k |
| 22ms | 50k | 22k | 28k |
| 24ms | 50k | 24k | 26k |

...

Die Puffergröße wird von der Simulation auf 32kByte bestimmt. Die maximale Bandbreite ist auf p=4000 kByte/sec verdoppelt, der Faktor $\dfrac{p-R}{p-r}$ wird 0.93. Für die Verzögerung bei b=32k ergibt sich dann

$$b = \frac{32k - 8k}{1000k} \cdot 0.93 + \frac{8k}{1000k} = (18 \cdot 0.93 + 8)m\sec \approx 24m\sec$$

Ersichtlich kann durch die Simulation für eine große Anzahl von Varianten die passende Puffergröße ermittelt werden.

Es ist zulässig, eine "unendlich" große Höchstbandbreite anzugeben; damit ergibt sich der Faktor $\dfrac{p-R}{p-r} \approx 1$ und

$$d = \frac{b}{R}$$

Die zugesagte maximale Verzögerung hängt nur noch von der Puffergröße ab und wird umso kleiner, je kleiner letzter ist. Sie kann durch die Simulation leicht bestimmt werden.

Nach dem RSVP-Protokoll bestimmt der Empfänger die zu reservierende Bandbreite durch Angabe der zu reservierenden Bandbreite und der Puffergröße. Daher werden bevorzugt die Quellparameter vom Sender zum Empfänger übertragen und dort die Simulation durchgeführt. In RSVP ist die Übertragung von derartigen Zusatzdaten vorgesehen. Es kann aber auch der Sender bereits eine solche Simulation für eine Auswahl von zu reservierenden Bandbreiten durchführen und dann dem Empfänger eine Auswahl von Bandbreite und Puffergröße, bezogen auf eine Blockgröße und Mindestabstand der Blöcke, übermitteln. Dies ist entweder im Rahmen von RSVP durch weitere Daten oder über eine weitere Netzwerkverbindung möglich.

Weiterhin ist es möglich, daß die Netzwerkknoten auf die mittels RSVP übertragenen Quellparameter zugreifen und sodann über eine Simulation den Pufferbedarf selbst ermitteln. Dies ist insbesondere dann interessant, wenn in den Netzwerkknoten eine Formierung (engl. 'reshaping') der Datenströme stattfindet. Beispielsweise wird ein anderes Übertragungsmedium zwischen den Netzwerkknoten als vom Sender bzw. zum Empfänger verwendet. Dann kann bei dem Aufbau der Verbindung der Netzwerkknoten über eine Simulation den benötigten Puffer bestimmen.

**EP 1 209 860 B1**

**Patentansprüche**

1. Methode zur Reservierung von Betriebsmitteln für die Übertragung von Quelldaten schwankender Datenrate in einem Datennetzwerk, in dem eine vorab bestimmbare Übertragungsqualität reservierbar ist, mit den Merkmalen:

   - Für den Quelldatenstrom werden Quellparameter in Form einer repetitiven Sequenz von maximalen Datenmengen und zugehörigen Zeiten bestimmt,
   - daraus wird eine Mindestbandbreite durch Division der Gesamtdatenmenge durch die Gesamtzeit pro Sequenz bestimmt,
   - für eine reservierte Bandbreite, die nicht kleiner als die Mindestbandbreite ist, wird mittels einer Simulation eine Puffergröße und eine Höchstbandbreite bestimmt,
   - die Reservierung der Betriebsmittel erfolgt mittels der so bestimmten Stromparameter Mindestbandbreite, Höchstbandbreite, Puffergröße und reservierter Bandbreite.

2. Methode nach Anspruch 1, wobei Quellparameter, die als eine erste Sequenz von Blockgrößen und zugehörigen Zeitabständen vorliegen, in eine zweite Sequenz von übertragenen Datenmengen und jeweils vergangener Zeit umgewandelt werden, und umgekehrt.

3. Methode nach Anspruch 1 oder 2, wobei die Simulation bei einer Folge von übertragenen Datenmengen und zugehörigen Zeiten seit Beginn der Sequenz von den Datenmengen das jeweilige Produkt von Zeitpunkt und reservierter Bandbreite subtrahiert und das Maximum als Puffergröße ausgibt.

4. Methode nach Anspruch 1 oder 2, wobei die Simulation die Quotienten aus Blockgröße und zugehörigen Zeitabständen bildet und das Maximum als Höchstbandbreite ausgibt.

5. Methode nach einem der Ansprüche 1 bis 4, wobei die Bestimmung der Stromparameter aus den Quellparametern beim Sender erfolgt.

6. Methode nach einem der Ansprüche 1 bis 4, wobei die Bestimmung der Stromparameter aus den Quellparametern beim Empfänger erfolgt.

7. Methode nach einem der Ansprüche 1 bis 4, wobei die Bestimmung der Stromparameter aus den Quellparametern in einem Übertragunsknoten erfolgt, der in dem Pfad zwischen Sender und Empfänger liegt.

**Claims**

1. Method for reserving operating means for transmitting source data of varying data rate in a data network in which a transmission quality determinable in advance can be reserved, having the following features:

   - for the source data stream, source parameters in the form of a repetitive sequence of maximum volumes of data and associated times are determined,
   - from these, a minimum bandwidth is determined by dividing the total volume of data by the total time per sequence,
   - for a reserved bandwidth which is not smaller than the minimum bandwidth, a simulation is used to determine a buffer size and a maximum bandwidth,
   - the operating means are reserved using the stream parameters determined in this way - minimum bandwidth, maximum bandwidth, buffer size and reserved bandwidth.

2. Method according to claim 1, where source parameters available in the form of a first sequence of block sizes and associated time intervals are converted into a second sequence of transmitted volumes of data and respective time elapsed, and vice versa.

3. Method according to claim 1 or 2, where, for a series of transmitted volumes of data and associated times since the start of the sequence, the simulation subtracts from the volumes of data the respective product of instant and reserved bandwidth and outputs the maximum as the buffer size.

4. Method according to claim 1 or 2, where the simulation forms the quotients of block size and associated time intervals and outputs the maximum as the maximum bandwidth.

5. Method according to one of claims 1 to 4, where the stream parameters are determined from the source parameters at the transmitter.

6. Method according to one of claims 1 to 4, where the stream parameters are determined from the source parameters at the receiver.

7. Method according to one of claims 1 to 4, where the stream parameters are determined from the source parameters at a transmission node located in the path between transmitter and receiver.

**Revendications**

1. Méthode de réservation de moyens d'exploitation pour la transmission de données de source à débit variable dans un réseau de données dans lequel une qualité de transmission préalablement déterminable peut être réservée, avec les caractéristiques :

   - pour le flux de données de source, on détermine des paramètres de source sous la forme d'une séquence répétitive de quantités maximales de données et de temps associés,
   - à partir de là, on détermine une largeur de bande minimale en divisant la quantité de données totale par le temps total pour chaque séquence,
   - pour une largeur de bande réservée qui n'est pas inférieure à la largeur de bande minimale, on détermine au moyen d'une simulation une dimension de tampon et une largeur de bande maximale,
   - la réservation des moyens d'exploitation s'effectue à l'aide des paramètres de flux ainsi déterminés, à savoir largeur de bande minimale, largeur de bande maximale, dimension de tampon et largeur de bande réservée.

2. Méthode selon la revendication 1, dans laquelle des paramètres de source qui sont présents sous la forme d'une première séquence de dimensions de bloc et d'intervalles de temps associés sont convertis en une deuxième séquence de quantités de données transmises et de temps respectivement passé, et inversement.

3. Méthode selon la revendication 1 ou 2, dans laquelle la simulation dans le cas d'une suite de quantités de données transmises et de temps associés depuis le début de la séquence soustrait des quantités de données le produit respectif de l'instant et de la largeur de bande réservée et fournit le maximum comme dimension de tampon.

4. Méthode selon la revendication 1 ou 2, dans laquelle la simulation forme le quotient de la dimension de bloc et des intervalles de temps associés et fournit le maximum comme largeur de bande maximale.

5. Méthode selon l'une des revendications 1 à 4, dans laquelle la détermination des paramètres de flux s'effectue à partir des paramètres de source dans l'émetteur.

6. Méthode selon l'une des revendications 1 à 4, dans laquelle la détermination des paramètres de flux s'effectue à partir des paramètres de source dans le récepteur.

7. Méthode selon l'une des revendications 1 à 4, dans laquelle la détermination des paramètres de flux s'effectue à partir des paramètres de source dans un noeud de transmission qui est situé sur le trajet entre émetteur et récepteur.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **P. FERGUSON ; G. HUSTON.** Quality of Service. Wiley & Sons, 1998

- **L. GEORGIADIS.** Efficient Support of Delay and Rate Guarantees in an Internet. *SIGCOMM,* 1996, 106-116